# EUROPEAN PATENT SPECIFICATION

(11) **EP 3 908 050 B1**
(45) Date of publication and mention of the grant of the patent: **31.12.2025**
(21) Application number: 21162414.3
(22) Date of filing: 12.03.2021
(51) Int. Cl.: H04W 60/00

(54) **NON-ACCESS STRATUM ASPECTS ON RESTRICTION ON USE OF ENHANCED COVERAGE IN 5TH GENERATION SYSTEMS**
NON-ACCESS-STRATUM-ASPEKTE ZUR BESCHRÄNKUNG DER VERWENDUNG VON ERWEITERTER ABDECKUNG IN 5G-SYSTEMEN
ASPECTS DE STRATE DE NON-ACCÈS SUR LA RESTRICTION DE L'UTILISATION D'UNE COUVERTURE AMÉLIORÉE DANS DES SYSTÈMES DE CINQUIÈME GÉNÉRATION

(30) Priority: 07.05.2020 US 202063021573 P
(43) Date of publication of application: 10.11.2021
(73) Proprietor: INTEL Corporation, Santa Clara, CA 95054 (US)
(72) Inventor: KEDALAGUDDE, Meghashree, Dattari, Hillsboro, Oregon 97124 (US); JAIN, Puneet, Hillsboro, Oregon 97124 (US); GUPTA, Vivek, San Jose, California 95138 (US)
(74) Representative: Viering, Jentschura & Partner mbB Patent- und Rechtsanwälte

(56) References cited:
- WO-A1-2018/129453
- US-A1- 2019 182 897
- ERICSSON ET AL: "UE support of restriction on enhanced coverage", vol. CT WG1, no. Zhangjiajie, P.R of China; 20170515 - 20170519, 5 June 2017 (2017-06-05), XP051271548, Retrieved from the Internet <URL:http://www.3gpp.org/ftp/Meetings_3GPP_SYNC/CT/Docs/> [retrieved on 20170605]
- INTEL ET AL: "Updates to Registration procedure for Restriction on use of enhanced coverage", vol. CT WG1, no. Xi'an, P.R. of China; 20190408 - 20190412, 2 June 2019 (2019-06-02), XP051745741, Retrieved from the Internet <URL:http://www.3gpp.org/ftp/Meetings%5F3GPP%5FSYNC/CT/Docs/CP%2D191129%2Ezip> [retrieved on 20190602]
- INTEL: "Solution for KI#6 - Management for Enhanced Coverage", vol. SA WG2, no. Sanya, P.R. of China; 20180416 - 20180420, 19 April 2018 (2018-04-19), XP051432608, Retrieved from the Internet <URL:http://www.3gpp.org/ftp/Meetings%5F3GPP%5FSYNC/SA2/Docs/> [retrieved on 20180419]

## Description

### TECHNICAL FIELD

Embodiments pertain to wireless communications. Some embodiments relate to wireless networks including 3GPP (Third Generation Partnership Project) and fifth-generation (5G) networks including 5G new radio (NR) (or 5G-NR) networks. Some embodiments relate to a fifth generation (5G) Core Access and Mobility Management Function (AMF) (5GC AMF). Some embodiments relate to restrictions on enhanced coverage (EC) in a 5G network.

### BACKGROUND

Mobile communications have evolved significantly from early voice systems to today's highly sophisticated integrated communication platform. With the increase in different types of devices communicating with various network devices, usage of 3GPP 5G NR systems has increased. The penetration of mobile devices (user equipment or UEs) in modern society has continued to drive demand for a wide variety of networked devices in many disparate environments. 5G NR wireless systems are forthcoming and are expected to enable even greater speed, connectivity, and usability, and are expected to increase throughput, coverage, and robustness and reduce latency and operational and capital expenditures. 5G-NR networks will continue to evolve based on 3GPP LTE-Advanced with additional potential new radio access technologies (RATs) to enrich people's lives with seamless wireless connectivity solutions delivering fast, rich content and services. As current cellular network frequency is saturated, higher frequencies, such as millimeter wave (mmWave) frequency, can be beneficial due to their high bandwidth.

One issue with a fifth generation (5G) Core Access and Mobility Management Function (AMF) is determining whether restrictions on use of enhanced coverage should be applied to a user equipment (UE).

WO 2018129453A1 concerns an apparatus of a Cellular-Internet-of-Things (CIoT) capable user equipment (UE) configured for Evolved Packet System (EPS) communications in a Public Land Mobile Network (PLMN). The apparatus includes processing circuitry configured to encode an Attach Request message for transmission to a Mobility Management Entity (MME) in the EPS, the Attach Request message including a UE Network Capability Information Element (IE) indicating whether the UE supports restriction on using enhanced coverage. The processing circuitry can decode an Attach Accept message confirming attachment to the MME, the Attach Accept message including an EPS Network Feature Support IE indicating whether use of enhanced coverage is restricted for the UE. The processing circuitry can refrain from using enhanced coverage in the PLMN when the UE supports restriction on using enhanced coverage and the EPS Network Feature Support IE indicates enhanced coverage is restricted for the UE.

US 20190182897A1 relates to the configuration of a UE (which includes processing circuitry) for enhanced coverage (EC) in a 5G network. The processing circuitry is to encode N1 configuration request signaling for transmission to an Access and Mobility Function (AMF) of the 5G network. The N1 configuration request signaling includes an EC support capability indication of whether the UE supports restriction for EC. An N1 configuration response signaling is decoded from the AMF, the N1 configuration response signaling including EC restriction information. The EC restriction information is determined based on the EC support capability indication and subscription information of the UE. An enhanced coverage restriction determination is performed using the EC restriction information. A cell is selected from a plurality of available cells within the 5G network based on the enhanced coverage restriction determination.

### SUMMARY

The invention is a method and apparatus as defined in the appended claims.

### BRIEF DESCRIPTION OF THE DRAWINGS

FIG. 1A illustrates an architecture of a network, in accordance with some embodiments.
FIG. 1B and FIG. 1C illustrate a non-roaming 5G system architecture in accordance with some embodiments.
FIG. 2 illustrates octets of a 5GS network feature support information element in accordance with some embodiments.
FIG. 3 is a table for octet 4 of a 5GS network feature support information element in accordance with some embodiments.
FIG. 4 illustrates octets of a 5GS network feature support information element in accordance with some alternate embodiments.
FIG. 5 is a table for octet 4 of a 5GS network feature support information element in accordance with some alternate embodiments.
FIG. 6 illustrates a functional block diagram of a communication station in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

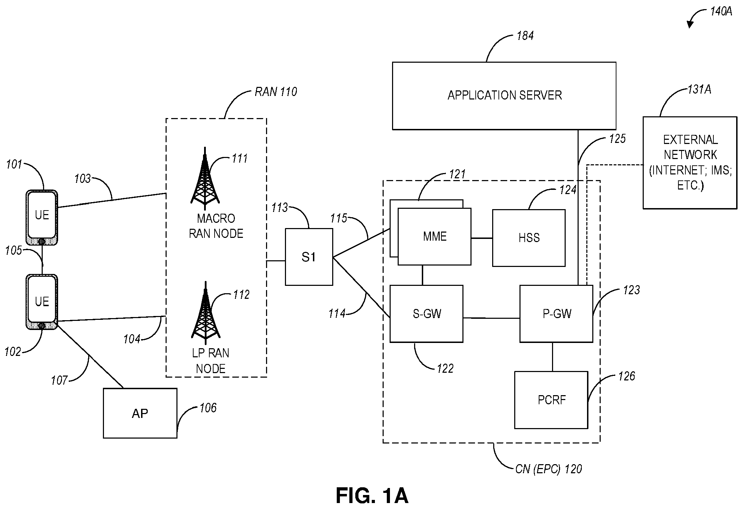

FIG. 1A illustrates an architecture of a network in accordance with some embodiments. The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as Personal Data Assistants (PDAs), pagers, laptop computers, desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein.

Any of the radio links described herein (e.g., as used in the network 140A or any other illustrated network) may operate according to any exemplary radio communication technology and/or standard.

LTE and LTE-Advanced are standards for wireless communications of highspeed data for UE such as mobile telephones. In LTE-Advanced and various wireless systems, carrier aggregation is a technology according to which multiple carrier signals operating on different frequencies may be used to carry communications for a single UE, thus increasing the bandwidth available to a single device. In some embodiments, carrier aggregation may be used where one or more component carriers operate on unlicensed frequencies.

Embodiments described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and further frequencies and Spectrum Access System (SAS) in 3.55-3.7 GHz and further frequencies).

Embodiments described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

In some embodiments, any of the UEs 101 and 102 can comprise an Internet-of-Things (IoT) UE or a Cellular IoT (CIoT) UE, which can comprise a network access layer designed for low-power IoT applications utilizing short-lived UE connections. In some embodiments, any of the UEs 101 and 102 can include a narrowband (NB) IoT UE (e.g., such as an enhanced NB-IoT (eNB-IoT) UE and Further Enhanced (FeNB-IoT) UE). An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

In some embodiments, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some embodiments, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some embodiments, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management. In an example, any of the nodes 111 and/or 112 can be a new generation Node-B (gNB), an evolved node-B (eNB), or another type of RAN node.

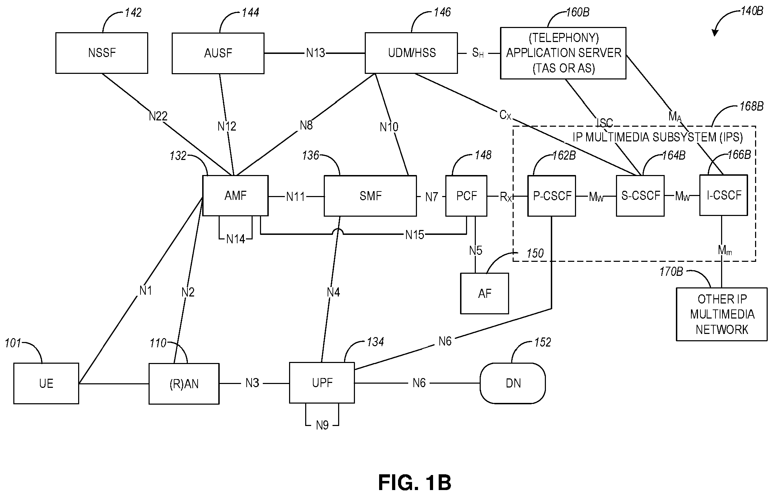

The RAN 110 is shown to be communicatively coupled to a core network (CN) 120 via an S1 interface 113. In embodiments, the CN 120 may be an evolved packet core (EPC) network, a NextGen Packet Core (NPC) network, or some other type of CN (e.g., as illustrated in reference to FIGS. 1B-1C). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility embodiments in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet. IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some embodiments, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some embodiments, the communication network 140A can be an IoT network or a 5G network, including 5G new radio network using communications in the licensed (5G NR) and the unlicensed (5G NR-U) spectrum. One of the current enablers of IoT is the narrowband-IoT (NB-IoT).

An NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some embodiments, the gNBs and the NG-eNBs can be connected to the AMF by NG-C interfaces, and to the UPF by NG-U interfaces. The gNBs and the NG-eNBs can be coupled to each other via Xn interfaces.

In some embodiments, the NG system architecture can use reference points between various nodes as provided by 3GPP Technical Specification (TS) 23.501 (e.g., V15.4.0, 2018-12). In some embodiments, each of the gNBs and the NG-eNBs can be implemented as a base station, a mobile edge server, a small cell, a home eNB, and so forth. In some embodiments, a gNB can be a master node (MN) and NG-eNB can be a secondary node (SN) in a 5G architecture.

FIG. 1B illustrates a non-roaming 5G system architecture in accordance with some embodiments. Referring to FIG. 1B, there is illustrated a 5G system architecture 140B in a reference point representation. More specifically, UE 102 can be in communication with RAN 110 as well as one or more other 5G core (5GC) network entities. The 5G system architecture 140B includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM)/home subscriber server (HSS) 146. The UPF 134 can provide a connection to a data network (DN) 152, which can include, for example, operator services, Internet access, or third-party services. The AMF 132 can be used to manage access control and mobility and can also include network slice selection functionality. The SMF 136 can be configured to set up and manage various sessions according to network policy. The UPF 134 can be deployed in one or more configurations according to the desired service type. The PCF 148 can be configured to provide a policy framework using network slicing, mobility management, and roaming (similar to PCRF in a 4G communication system). The UDM can be configured to store subscriber profiles and data (similar to an HSS in a 4G communication system).

In some embodiments, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the UE 102 within the IM subsystem (IMS) 168B. The S-CSCF 164B can be configured to handle the session states in the network, and the E-CSCF can be configured to handle certain embodiments of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some embodiments, the I-CSCF 166B can be connected to another IP multimedia network 170E, e.g. an IMS operated by a different network operator.

In some embodiments, the UDM/HSS 146 can be coupled to an application server 160E, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1B can also be used.

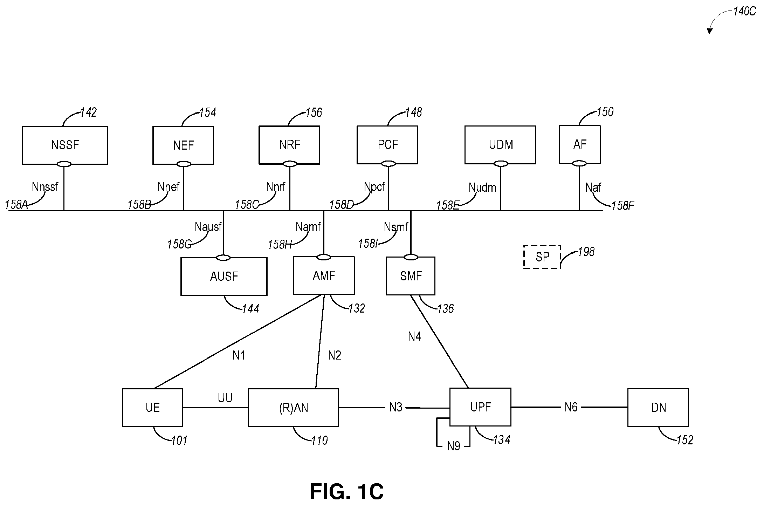

FIG. 1C illustrates a 5G system architecture 140C and a service-based representation. In addition to the network entities illustrated in FIG. 1B, system architecture 140C can also include a network exposure function (NEF) 154 and a network repository function (NRF) 156. In some embodiments, 5G system architectures can be service-based and interaction between network functions can be represented by corresponding point-to-point reference points Ni or as service-based interfaces.

In some embodiments, as illustrated in FIG. 1C, service-based representations can be used to represent network functions within the control plane that enable other authorized network functions to access their services. In this regard, 5G system architecture 140C can include the following service-based interfaces: Namf 158H (a service-based interface exhibited by the AMF 132), Nsmf 158I (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1C can also be used.

In some embodiments, any of the UEs or base stations described in connection with FIGS. 1A-1C can be configured to perform the functionalities described herein.

Mobile communication has evolved significantly from early voice systems to today's highly sophisticated integrated communication platform. The next generation wireless communication system, 5G, or new radio (NR) will provide access to information and sharing of data anywhere, anytime by various users and applications. NR is expected to be a unified network/system that targets to meet vastly different and sometimes conflicting performance dimensions and services. Such diverse multi-dimensional requirements are driven by different services and applications. In general, NR will evolve based on 3GPP LTE-Advanced with additional potential new Radio Access Technologies (RATs) to enrich people's lives with better, simple, and seamless wireless connectivity solutions. NR will enable everything connected by wireless and deliver fast, rich content and services.

Rel-15 NR systems are designed to operate on the licensed spectrum. The NR-unlicensed (NR-U), a short-hand notation of the NR-based access to unlicensed spectrum, is a technology that enables the operation of NR systems on the unlicensed spectrum.

In order to deal with use of extensive resources from the network, the operator may prevent specific subscribers from using enhanced coverage. Subscribers can be restricted to use the enhanced coverage feature based on their subscription. In 5^{th} Generation Systems (5GS) the subscription information is stored in the UDM which provides Enhanced Coverage Restricted Information (ECRI). When UE is in WB-N1 mode (using LTE RAT with eMTC enhancements) the ECRI indicates whether coverage enhancement (CE) mode B is restricted for the UE, or both CE mode A and CE mode B are restricted for the UE, or both CE mode A and CE mode B are not restricted for the UE. When UE is in NB-N1 mode (using NB-IoT RAT), the ECRI indicates whether the enhanced coverage is restricted or not for the UE. He AMF receives the ECRI from UDM during Registration procedure.

If the UE supports restriction of use of enhanced coverage, enhancements are needed in non-access stratum (NAS) signaling so that the AMF can determine whether enhanced coverage and appropriate CE mode needs to be enabled for the UE or not based on local configuration, UE Usage setting, UE subscription information and network policies, or any combination of these factors.

This disclosure provides stage-3 updates at NAS level to enable restriction on use of enhanced coverage for UEs that support this feature.

This disclosure proposes to enhance NAS signaling as part of registration procedure so that UEs that support the restriction of coverage enhancement feature can use it based on their subscription when the network (e.g., the AMF) decides to enable this. In case of eMTC (e.g., WB-N1 mode) UEs, this results in enabling the appropriate CE mode (CE mode A or B or both or neither). In case of NB-IoT (e.g., NB-N1 mode) UEs, this results in restricting the coverage enhancement or not. In EPS the coverage enhancement feature for restriction on use of CE mode B was not based on subscription, whereas in 5Gs the UDM has this info based on subscription.

Several vendors and operators are planning to deploy 5G systems and are likely to use cellular Internet of Things (CIoT) enhancements. As part of these enhancements several vendors and operators are expected to deploy the restriction of coverage enhancement feature.

In order to deal with use of extensive resources from the network, the operator may prevent specific subscribers from using enhanced coverage. The UE supporting restriction on use of enhanced coverage indicates its support for restriction on use of enhanced coverage in the REGISTRATION REQUEST message using the 5GMM capability IE. If the UE supports restriction on use of enhanced coverage, the AMF indicates in the REGISTRATION ACCEPT message using the 5GS network feature support IE that:
a) when in WB-N1 mode, whether CE mode B is restricted for the UE, or both CE mode A and CE mode B are restricted for the UE, or both CE mode A and CE mode B are not restricted for the UE; or
b) when in NB-N1 mode, whether the use of enhanced coverage is restricted or not for the UE.

Embodiments of the present disclosure may be reflected in updates to 3GPP specification TS 24.501 v16.4.1 (2020-03). Updated sections of TS 24.501 are shown below.

### 5.3.18 Restriction on use of enhanced coverage

In order to deal with use of extensive resources from the network, the operator may prevent specific subscribers from using enhanced coverage (see 3GPP TS 23.501 v16.4.0 (2020-03)). When in NB-N1 mode, the UE shall indicate support for restriction on use of enhanced coverage. When in WB-N1 mode, the UE supporting either CE mode A or CE mode B shall indicate support for restriction on use of enhanced coverage. The UE supporting restriction on use of enhanced coverage indicates its support for restriction on use of enhanced coverage in the REGISTRATION REQUEST message. If the UE supports restriction on use of enhanced coverage, the AMF indicates in the REGISTRATION ACCEPT message (see subclause 5.5.1.2 and subclause 5.5.1.3) that:
a) when in WB-N1 mode, whether CE mode B is restricted for the UE, or both CE mode A and CE mode B are restricted for the UE, or both CE mode A and CE mode B are not restricted for the UE; or
b) when in NB-N1 mode, whether the use of enhanced coverage is restricted or not for the UE;

### 5.5.1.2.2 Initial registration initiation

.....

If the UE supports the restriction on use of enhanced coverage, the UE shall set the RestrictEC bit to "Restriction on use of enhanced coverage supported" in the 5GMM capability IE of the REGISTRATION REQUEST message.

### 5.5.1.2.4 Initial registration accepted by the network

....

If the UE indicates support for restriction on use of enhanced coverage in the REGISTRATION REQUEST message:
a) in WB-N1 mode and if the AMF decides to restrict the use of CE mode B for the UE, then the AMF shall set the RestrictEC bit to "CE mode B is restricted"; or
b) in WB-N1 mode and if the AMF decides to restrict the use of both CE mode A and CE mode B for the UE, then the AMF shall set the RestrictEC bit to " Both CE mode A and CE mode B are restricted"; or
c) in NB-N1 mode and if the AMF decides to restrict the use of enhanced coverage for the UE, then the AMF shall set the RestrictEC bit to "Use of enhanced coverage is restricted".
in the 5GS network feature support IE in the REGISTRATION ACCEPT message.

### 5.5.1.3.2 Mobility and periodic registration update initiation

...

If the UE supports the restriction on use of enhanced coverage, the UE shall set the RestrictEC bit to "Restriction on use of enhanced coverage supported" in the 5GMM capability IE of the REGISTRATION REQUEST message.

### 5.5.1.3.4 Mobility and periodic registration update accepted by the network

.....

If the UE indicates support for restriction on use of enhanced coverage in the REGISTRATION REQUEST message:
a) in WB-N1 mode and if the AMF decides to restrict the use of CE mode B for the UE, then the AMF shall set the RestrictEC bit to "CE mode B is restricted"; or
b) in WB-N1 mode and if the AMF decides to restrict the use of both CE mode A and CE mode B for the UE, then the AMF shall set the RestrictEC bit to " Both CE mode A and CE mode B are restricted"; or
c) in NB-N1 mode and if the AMF decides to restrict the use of enhanced coverage for the UE, then the AMF shall set the RestrictEC bit to "Use of enhanced coverage is restricted".
in the 5GS network feature support IE in the REGISTRATION ACCEPT message.

### 9.11.3.5 5GS network feature support

The purpose of the 5GS network feature support information element is to indicate whether certain features are supported by the network.

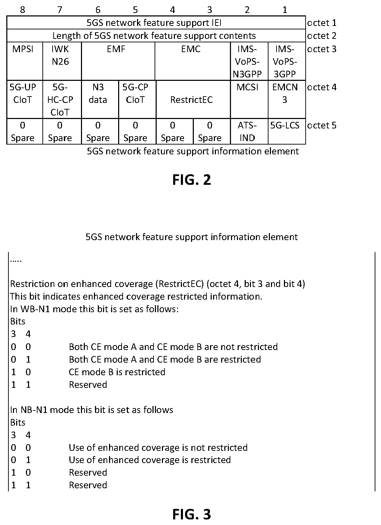

The 5GS network feature support information element is coded as shown in FIG. 2 and FIG. 3. The 5GS network feature support is a type 4 information element with a minimum length of 3 octets and a maximum length of 5 octets. If the network does not include octet 4 as defined in FIG. 2 and FIG. 3 in the present version of the protocol, then the UE shall interpret this as a receipt of an information element with all bits of octet 4 coded as zero.

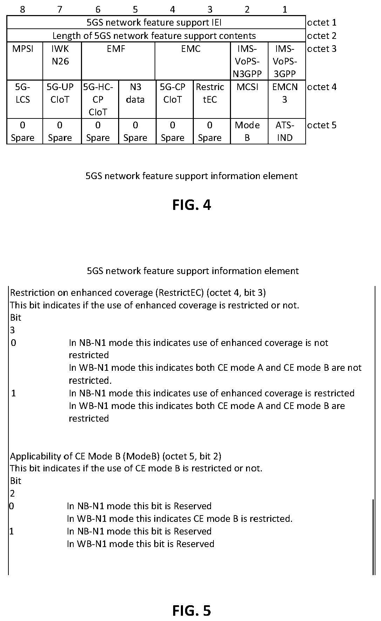

Different variants are possible for AMF to convey this information to UE. In another variation of the 5GS network feature support IE, the IE may be encoded as follows (see FIG. 4 and FIG. 5) wherein the two bits are not contiguous. In certain embodiments ModeB may be used by other names e.g. RestricECModeB, etc. The bit encoding can be different while preserving the semantics. The bit ModeB is RAT specific whereas RestricEC is RAT agnostic and this can apply in general to different forms of encoding. In yet another variant it may be possible to define a separate new IE to convey this information as well.

Some embodiments are directed to an apparatus of a fifth generation (5G) Core Access and Mobility Management Function (AMF), the apparatus comprising: processing circuitry; and memory. In these embodiments, the processing circuitry is be configured to decode a REGISTRATION REQUEST message received from a user equipment (UE), wherein when the UE indicates support for restriction on use of enhanced coverage (EC), RestrictEC bit is set to "Restriction on use of enhanced coverage supported" in a 5G mobility management (5GMM) capability information element (IE) of the REGISTRATION REQUEST message. The processing circuitry is also be configured to encode a REGISTRATION ACCEPT message for transmission to the UE. When the UE indicated support for the restriction on use of EC in the REGISTRATION REQUEST message, the processing circuitry is configured to set the RestrictEC bit in a 5GS network feature support IE in the REGISTRATION ACCEPT message to indicate coverage enhancement modes are restricted.

To indicate coverage enhancement modes are restricted when the UE indicated support for the restriction on use of EC in the REGISTRATION REQUEST message, the processing circuitry is configured to set the RestrictEC bit in a 5GS network feature support IE in the REGISTRATION ACCEPT message to "CE mode B is restricted" when the UE is in WB-N1 (wideband N1) mode and the AMF determines that CE (coverage enhancement) mode B for the UE is to be restricted. In these embodiments, the processing circuitry is configured to set the RestrictEC bit in the 5GS network feature support IE in the REGISTRATION ACCEPT message to "Both CE mode A and CE mode B are restricted" when the UE is in the WB-N1 mode and the AMF determines to restrict use of both CE mode A and the CE mode B for the UE. In these embodiments, the processing circuitry is configured to set the RestrictEC bit in the 5GS network feature support IE in the REGISTRATION ACCEPT message to "Use of enhanced coverage is restricted' when the UE is in a NB-N1 mode and the AMF determines to restrict use of the enhanced coverage for the UE.

In some embodiments, when the UE is in the WB-N1 mode, the processing circuitry is configured to set bits 3 and 4 of octet 4 of the 5GS network feature support IE to: '0' and '0' to indicate that both CE mode A and CE mode B are not restricted; '0' and '1' to indicate that both CE mode A and CE mode B are restricted; and '1' and '0' to indicate that CE mode B is restricted. In these embodiments, when the UE is in NB-N1 mode, the processing circuitry is configured to set bits 3 and 4 of octet 4 of the 5GS network feature support IE to: '0' and '0' to indicate that use of enhanced coverage is not restricted; and '0' and '1' to indicate that use of enhanced coverage is restricted.

When the processing circuitry does not include octet 4 in the 5GS network feature support IE of the REGISTRATION ACCEPT message, then the 5GS network feature support IE, all bits of octet 4 coded are to be interpreted by the UE as zero.

In some embodiments, the processing circuitry may be configured to use subscription information stored in a Unified Data Management (UDM) of a 5G core network (5GCN) to determine whether to restrict use of the CE mode B for the UE in the WB-N1 mode, to restrict use of both CE mode A and the CE mode B for the UE in the WB-N1 mode, or to restrict use of the enhanced coverage for the UE in the NB-N1 mode.

In some embodiments, in N1 mode, the UE may be allowed access to the 5GCN via a 5G radio access network (RAN) via an N1 interface, the AMF being part of the 5G core network. In these embodiments, in the NB-N1 mode (narrow-band N1 mode), a current serving radio access network provides access to network services via E-UTRA (Evolved Universal Terrestrial Radio Access) connected to the 5GCN for a NB-IoT (narrow-band internet-of-things) UE via the N1 interface. In some embodiments, in the WB-N1 mode (wide band N1 mode), the current serving radio access network provides access to network services via E-UTRA connected to the 5GCN for UE not in NB-N1 mode via the N1 interface. In some embodiments, the CE mode A corresponds to a lower number of physical random-access channel (PRACH) repetitions than CE mode B.

In some embodiments, the REGISTRATION REQUEST message may be an initial registration initiation. In some embodiments, the REGISTRATION REQUEST message may be a mobility or periodic registration update initiation. In some embodiments, the memory may be configured to store the decoded REGISTRATION REQUEST message.

Some embodiments are directed to a non-transitory computer readable storage medium configured to store instructions for execution by processing circuitry of a fifth generation (5G) Core Access and Mobility Management Function (AMF) in accordance with the embodiments described here. Some embodiments are directed to a method performed by processing circuitry of a fifth generation (5G) Core Access and Mobility Management Function (AMF) in accordance with the embodiments described herein.

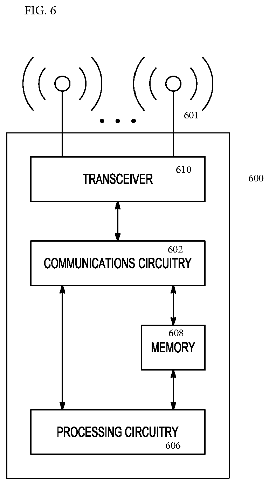

FIG. 6 illustrates a functional block diagram of a communication station in accordance with some embodiments. Communication station 600 may be suitable for use as a UE, a base station or gNB or other device in accordance with some embodiments. The communication station 600 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device. Elements of communication station 600 may also be suitable for an apparatus of a fifth generation (5G) Core Access and Mobility Management Function (AMF).

The communication station 600 may include communications circuitry 602 and a transceiver 610 for transmitting and receiving signals to and from other communication stations using one or more antennas 601. The communications circuitry 602 may include circuitry that can operate the physical layer (PHY) communications and/or medium access control (MAC) communications for controlling access to the wireless medium, and/or any other communications layers for transmitting and receiving signals. The communication station 600 may also include processing circuitry 606 and memory 608 arranged to perform the operations described herein. In some embodiments, the communications circuitry 602 and the processing circuitry 606 may be configured to perform operations detailed in the above figures, diagrams, and flows.

In accordance with some embodiments, the communications circuitry 602 may be arranged to contend for a wireless medium and configure frames or packets for communicating over the wireless medium. The communications circuitry 602 may be arranged to transmit and receive signals. The communications circuitry 602 may also include circuitry for modulation/demodulation, upconversion/downconversion, filtering, amplification, etc. In some embodiments, the processing circuitry 606 of the communication station 600 may include one or more processors. In other embodiments, two or more antennas 601 may be coupled to the communications circuitry 602 arranged for sending and receiving signals. The memory 608 may store information for configuring the processing circuitry 606 to perform operations for configuring and transmitting message frames and performing the various operations described herein. The memory 608 may include any type of memory, including non-transitory memory, for storing information in a form readable by a machine (e.g., a computer). For example, the memory 608 may include a computer-readable storage device, read-only memory (ROM), random-access memory (RAM), magnetic disk storage media, optical storage media, flash-memory devices and other storage devices and media.

In some embodiments, the communication station 600 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 600 may include one or more antennas 601. The antennas 601 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 600 may include one or more of a keyboard, a display, a non-volatile memory port, multiple antennas, a graphics processor, an application processor, speakers, and other mobile device elements. The display may be an LCD screen including a touch screen.

Although the communication station 600 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 600 may refer to one or more processes operating on one or more processing elements.

The Abstract is provided to allow the reader to ascertain the nature and gist of the technical disclosure. It is submitted with the understanding that it will not be used to limit or interpret the scope or meaning of the claims.

## Claims

1. An apparatus (600) of a fifth generation, 5G, Core Access and Mobility Management Function, AMF, the apparatus comprising: processing circuitry (606), and memory (608),
wherein the processing circuitry (606) is configured to perform operations to:
decode a REGISTRATION REQUEST message received from a user equipment, UE, wherein when the UE indicates support for restriction on use of enhanced coverage, EC, a RestrictEC bit is set to "Restriction on use of enhanced coverage supported" in a fifth generation mobility management, 5GMM, capability information element, IE, of the REGISTRATION REQUEST message;
encode a REGISTRATION ACCEPT message for transmission to the UE; and
wherein when the UE indicated support for the restriction on use of EC in the REGISTRATION REQUEST message, the processing circuitry (606) is configured to set RestrictEC bits comprising bits 3 and 4 of octet 4, in a 5G system, 5GS, network feature support IE in the REGISTRATION ACCEPT message to indicate coverage enhancement modes are restricted,
wherein to indicate coverage enhancement modes are restricted when the UE indicated support for the restriction on use of EC in the REGISTRATION REQUEST message, the processing circuitry (606) is further configured to perform operations to:
set the RestrictEC bits in the 5GS network feature support IE in the REGISTRATION ACCEPT message to "CE mode B is restricted" when the UE is in wideband N1 mode, WB-N1, and the AMF determines that coverage enhancement, CE, mode B for the UE is to be restricted;
set the RestrictEC bits in the 5GS network feature support IE in the REGISTRATION ACCEPT message to "Both CE mode A and CE mode B are restricted" when the UE is in the WB-N1 mode and the AMF determines to restrict use of both CE mode A and the CE mode B for the UE; and
set the RestrictEC bits in the 5GS network feature support IE in the REGISTRATION ACCEPT message to "Use of enhanced coverage is restricted' when the UE is in a narrow-band NI, NB-N1, mode and the AMF determines to restrict use of the enhanced coverage for the UE,
wherein, when the UE is in the WB-N1 mode, the processing circuitry (606) is further configured to perform operations to set the RestrictEC bits of the 5GS network feature support IE to:
'0' and '0' to indicate that both CE mode A and CE mode B are not restricted;
'0' and '1' to indicate that both CE mode A and CE mode B are restricted; and
'1' and '0' to indicate that CE mode B is restricted, and
wherein, when the UE is in NB-N1 mode, the processing circuitry is configured to set the RestrictEC bits of the 5GS network feature support IE to:
'0' and '0' to indicate that use of enhanced coverage is not restricted; and
'0' and '1' to indicate that use of enhanced coverage is restricted, and
wherein when the processing circuitry (606) is further configured to refrain from including octet 4 in the 5GS network feature support IE of the REGISTRATION ACCEPT message the UE is caused to interpret all bits of octet 4 of the 5GS network feature support IE as zero.

2. The apparatus of claim 1, wherein the processing circuitry (606) is further configured to perform operations to use subscription information stored in a Unified Data Management, UDM, of a 5G core network, 5GCN, to determine whether to restrict use of the CE mode B for the UE in the WB-N1 mode, to restrict use of both CE mode A and the CE mode B for the UE in the WB-N 1 mode, or to restrict use of the enhanced coverage for the UE in the NB-N1 mode.

3. The apparatus of claim 2, wherein in the NB-N1 mode and the WB-N1 mode, the UE is allowed access to the 5GCN via a 5G radio access network, RAN via an N1 interface, the AMF being part of the 5GCN, and
wherein in the NB-N1 mode, a current serving radio access network provides access to network services via E-UTRA, Evolved Universal Terrestrial Radio Access, connected to the 5GCN for a narrow-band internet-of-things, NB-IoT, UE via the N1 interface.

4. The apparatus of claim 3, wherein in the WB-N 1 mode, the current serving radio access network provides access to network services via E-UTRA connected to the 5GCN for UE not in NB-N1 mode via the N1 interface.

5. The apparatus of claim 4, wherein the CE mode A corresponds to a lower number of physical random-access channel, PRACH, repetitions than CE mode B.

6. The apparatus of claim 5, wherein the REGISTRATION REQUEST message is an initial registration initiation.

7. The apparatus of claim 5, wherein the REGISTRATION REQUEST message is a mobility or periodic registration update initiation.

8. The apparatus of claim 6, wherein the memory (608) is configured to store the decoded REGISTRATION REQUEST message.

9. A non-transitory computer readable storage medium configured to store instructions for execution by processing circuitry of the apparatus of the fifth generation, 5G, Core Access and Mobility Management Function, AMF, of any one of claims 1-8, the instructions causing the processing circuitry (606) to perform the operations of any one of claims 1-8.

10. A method performed by processing circuitry of a fifth generation, 5G, Core Access and Mobility Management Function, AMF, with the method comprising the performance of the operations of any one of claims 1-8.

## Patentansprüche

1. Einrichtung (600) einer Fünfte-Generation, 5G, - Kernnetz-Zugriffs- und Mobilitätsverwaltungsfunktion, AMF, wobei die Einrichtung Folgendes umfasst: eine Verarbeitungsschaltungsanordnung (606) und einen Speicher (608),
wobei die Verarbeitungsschaltungsanordnung (606) dazu ausgelegt ist, Operationen durchzuführen zum:
Decodieren einer REGISTRIERUNGSANFORDERUNGS-Nachricht, die von einem Benutzergerät, UE, empfangen wird, wobei, wenn das UE Unterstützung für eine Einschränkung der Verwendung einer erweiterten Abdeckung, EC, anzeigt, ein RestrictEC-Bit auf "Restriction on use of enhanced coverage supported (Einschränkung der Verwendung erweiterter Abdeckung unterstützt)" in einem Fünfte-Generation-Mobilitätsverwaltungs, 5GMM, - Fähigkeitsinformationselement, IE, der REGISTRIERUNGSANFORDERUNGS-Nachricht gesetzt wird;
Codieren einer REGISTRIERUNGSANNAHME-Nachricht zur Übertragung an das UE; und
wobei, wenn das UE Unterstützung für die Einschränkung der Verwendung von EC in der REGISTRIERUNGSANFORDERUNGS-Nachricht angezeigt hat, die Verarbeitungsschaltungsanordnung (606) dazu ausgelegt ist, RestrictEC-Bits, die Bit 3 und 4 des Oktetts 4 umfassen, in einem 5G-System, 5GS, Netzwerkmerkmalsunterstützungs-IE in der REGISTRIERUNGSANFORDERUNGS-Nachricht zu setzen, um anzuzeigen, dass Abdeckungserweiterungsmodi eingeschränkt sind,
wobei zum Anzeigen, dass Abdeckungserweiterungsmodi eingeschränkt sind, wenn das UE Unterstützung für die Einschränkung der Verwendung von EC in der REGISTRIERUNGSANFORDERUNGS-Nachricht angezeigt hat, die Verarbeitungsschaltungsanordnung (606) ferner dazu ausgelegt ist, Operationen durchzuführen zum:
Setzen der RestrictEC-Bits im 5GS-Netzwerkmerkmalsunterstützungs-IE in der REGISTRIERUNGSANNAHME-Nachricht auf "CE mode B is restricted (CE-Modus B ist eingeschränkt)", wenn sich das UE im Breitband-N1-Modus, WB-N1, befindet, und die AMF bestimmt, dass der Abdeckungserweiterungs, CE, -Modus B für das UE eingeschränkt werden soll;
Setzen der RestrictEC-Bits im 5GS-Netzwerkmerkmalsunterstützungs-IE in der REGISTRIERUNGSANNAHME-Nachricht auf "Both CE mode A and CE mode B are restricted (sowohl CE-Modus A als auch CE-Modus B sind eingeschränkt)", wenn sich das UE im WB-N1-Modus befindet und die AMF bestimmt, die Verwendung sowohl des CE-Modus A als auch des CE-Modus B für das UE einzuschränken; und
Setzen der RestrictEC-Bits im 5GS-Netzwerkmerkmalsunterstützungs-IE in der REGISTRIERUNGSANNAHME-Nachricht auf "Use of enhanced coverage is restricted (Verwendung erweiterter Abdeckung ist eingeschränkt)", wenn sich das UE in einem Schmalband-NI, NB-N1, -Modus befindet und die AMF bestimmt, die Verwendung der erweiterten Abdeckung für das UE einzuschränken,
wobei, wenn sich das UE im WB-N1-Modus befindet, die Verarbeitungsschaltungsanordnung (606) ferner ausgelegt ist zum Durchführen von Operationen zum Setzen der RestrictEC-Bits des 5GS-Netzwerkmerkmalsunterstützungs-IE wie folgt:
"0" und "0", um anzuzeigen, dass sowohl der CE-Modus A als auch der CE-Modus B nicht eingeschränkt sind;
"0" und "1", um anzugeben, dass sowohl der CE-Modus A als auch der CE-Modus B eingeschränkt sind; und
"1" und "0", um anzuzeigen, dass der CE-Modus B eingeschränkt ist, und
wobei, wenn sich das UE im NB-N1-Modus befindet, die Verarbeitungsschaltungsanordnung ferner ausgelegt ist zum Setzen der RestrictEC-Bits des 5GS-Netzwerkmerkmalsunterstützungs-IE wie folgt:
"0" und "0", um anzuzeigen, dass die Nutzung der erweiterten Abdeckung nicht eingeschränkt ist; und
"0" und "1", um anzuzeigen, dass die Nutzung der erweiterten Abdeckung eingeschränkt ist, und
wobei, wenn die Verarbeitungsschaltungsanordnung (606) ferner dazu ausgelegt ist, Oktett 4 nicht in das 5GS-Netzwerkmerkmalsunterstützungs-IE der REGISTRIERUNGSANNAHME-Nachricht aufzunehmen, das UE veranlasst wird, alle Bits des Oktetts 4 des 5GS-Netzwerkmerkmalsunterstützungs-IE als null zu interpretieren.

2. Einrichtung nach Anspruch 1, wobei die Verarbeitungsschaltungsanordnung (606) ferner ausgelegt ist zum Durchführen von Operationen zum Verwenden von Subskriptionsinformationen, die in einer vereinheitlichten Datenverwaltung, UDM, eines 5G-Kernnetzwerks, 5GCN, gespeichert sind, um zu bestimmen, ob die Verwendung des CE-Modus B für das UE im WB-N1-Modus eingeschränkt werden soll, um die Verwendung sowohl des CE-Modus A als auch des CE-Modus B für das UE im WB-N1-Modus einzuschränken oder um die Verwendung der erweiterten Abdeckung für das UE im NB-N1-Modus einzuschränken.

3. Einrichtung nach Anspruch 2, wobei im NB-N1-Modus und WB-N1-Modus dem UE der Zugriff auf das 5GCN über ein 5G-Funkzugangsnetzwerk, RAN, über eine N1-Schnittstelle erlaubt wird, wobei die AMF Teil des 5GCN ist, und wobei im NB-N1-Modus ein aktuelles versorgendes Funkzugangsnetzwerk Zugriff auf Netzwerkdienste über E-UTRA, Evolved Universal Terrestrial Radio Access, verbunden mit dem 5GCN für ein schmalbandiges Internet-of-Things, NB-IoT, -UE über die N1-Schnittstelle bereitstellt.

4. Einrichtung nach Anspruch 3, wobei im WB-N1-Modus das aktuelle versorgende Funkzugangsnetzwerk Zugriff auf Netzwerkdienste über E-UTRA verbunden mit dem 5GCN für ein UE, das sich nicht im NB-N1-Modus, befindet, über die N1-Schnittstelle bereitstellt.

5. Einrichtung nach Anspruch 4, wobei der CE-Modus A einer niedrigeren Anzahl von Physischer-Direktzugriffskanal, PRACH, -Wiederholungen als der CE-Modus B entspricht

6. Einrichtung nach Anspruch 5, wobei die REGISTRIERUNGSANFORDERUNGS-Nachricht eine anfängliche Registrierungseinleitung ist.

7. Einrichtung nach Anspruch 5, wobei die REGISTRIERUNGSANFORDERUNGS-Nachricht eine Mobilitäts- oder periodische Registrierungsaktualisierungs-Einleitung ist.

8. Einrichtung nach Anspruch 6, wobei der Speicher (608) dazu ausgelegt ist, die decodierte REGISTRIERUNGSANFORDERUNGS-Nachricht zu speichern.

9. Nicht-transitorisches computerlesbares Speichermedium, das dazu ausgelegt ist, Anweisungen zur Ausführung durch eine Verarbeitungsschaltungsanordnung der Einrichtung der Fünfte-Generation, 5G, -Kernnetz-Zugriffs- und Mobilitätsverwaltungsfunktion, AMF, nach einem der Ansprüche 1-8 zu speichern, wobei die Anweisungen bewirken, dass die Verarbeitungsschaltungsanordnung (606) die Operationen nach einem der Ansprüche 1-8 durchführt.

10. Verfahren, das durch eine Verarbeitungsschaltungsanordnung einer Fünfte-Generation, 5G, -Kernnetz-Zugriffs- und Mobilitätsverwaltungsfunktion, AMF, durchgeführt wird, wobei das Verfahren die Durchführung der Operationen nach einem der Ansprüche 1-8 umfasst.

## Revendications

1. Appareil (600) d'une AMF, « Core Access and Mobility Management Function » de cinquième génération, 5G, l'appareil comprenant : une circuiterie de traitement (606), et une mémoire (608),
dans lequel la circuiterie de traitement (606) est configurée pour réaliser des opérations pour :
décoder un message REGISTRATION REQUEST reçu en provenance d'un équipement utilisateur, UE, dans lequel, lorsque l'UE indique un support pour une restriction de l'utilisation de couverture améliorée, EC, un bit RestrictEC est réglé à « Restriction de l'utilisation de couverture améliorée supportée » dans un élément d'informations, IE, de capacité de gestion de mobilité de cinquième génération, 5GMM, du message REGISTRATION REQUEST ;
encoder un message REGISTRATION ACCEPT pour transmission à l'UE ; et
dans lequel, lorsque l'UE a indiqué un support pour la restriction de l'utilisation d'EC dans le message REGISTRATION REQUEST, la circuiterie de traitement (606) est configurée pour régler des bits RestrictEC comprenant des bits 3 et 4 d'octet 4, dans un IE de support d'option de réseau de système 5G, 5GS, dans le message REGISTRATION ACCEPT pour indiquer que des modes d'amélioration de couverture sont restreints,
dans lequel, pour indiquer que des modes d'amélioration de couverture sont restreints lorsque l'UE a indiqué un support pour la restriction de l'utilisation d'EC dans le message REGISTRATION REQUEST, la circuiterie de traitement (606) est en outre configurée pour réaliser des opérations pour :
régler les bits RestrictEC dans l'IE de support d'option de réseau 5GS dans le message REGISTRATION ACCEPT à « CE mode B est restreint » lorsque l'UE est en mode N1 large bande, WB-N1, et l'AMF détermine qu'une amélioration de couverture, CE, mode B pour l'UE doit être restreinte ;
régler les bits RestrictEC dans l'IE de support d'option de réseau 5GS dans le message REGISTRATION ACCEPT à « CE mode A et CE mode B sont tous les deux restreints » lorsque l'UE est dans le mode WB-N1 et l'AMF détermine de restreindre l'utilisation des deux CE mode A et CE mode B pour l'UE ; et
régler les bits RestrictEC dans l'IE de support d'option de réseau 5GS dans le message REGISTRATION ACCEPT à « Utilisation de couverture améliorée est restreinte » lorsque l'UE est dans un mode bande étroite NI, NB-N1, et l'AMF détermine de restreindre l'utilisation de la couverture améliorée pour l'UE,
dans lequel, lorsque l'UE est dans le mode WB-N1, la circuiterie de traitement (606) est en outre configurée pour réaliser des opérations pour régler les bits RestrictEC de l'IE de support d'option de réseau 5GS à :
'0' et '0' pour indiquer que CE mode A et de CE mode B ne sont tous les deux pas restreints ;
'0' et '1' pour indiquer que CE mode A et de CE mode B sont tous les deux restreints ; et
'1' et '0' pour indiquer que CE mode B est restreint, et dans lequel, lorsque l'UE est en mode NB-N1, la circuiterie de traitement est configurée pour régler les bits RestrictEC de l'IE de support d'option de réseau 5GS à :
'0' et '0' pour indiquer que l'utilisation de couverture améliorée n'est pas restreinte ; et
'0' et '1' pour indiquer que l'utilisation de couverture améliorée est restreinte, et
dans lequel, lorsque la circuiterie de traitement (606) est en outre configurée pour s'abstenir d'inclure octet 4 dans l'IE de support d'option de réseau 5GS du message REGISTRATION ACCEPT, l'UE est amené à interpréter tous les bits d'octet 4 de l'IE de support d'option de réseau 5GS comme étant zéro.

2. Appareil de la revendication 1, dans lequel la circuiterie de traitement (606) est en outre configurée pour réaliser des opérations pour utiliser des informations d'abonnement stockées dans une UDM, « Unified Data Management », d'un réseau d'infrastructure 5G, 5GCN, pour déterminer s'il faut restreindre l'utilisation de la CE mode B pour l'UE dans le mode WB-N1, restreindre l'utilisation de CE mode A et de CE mode B tous les deux pour l'UE dans le mode WB-N1, ou restreindre l'utilisation de la couverture améliorée pour l'UE dans le mode NB-N1.

3. Appareil de la revendication 2, dans lequel, dans le mode NB-N1 et le mode WB-N1, l'UE est permis d'accéder au 5GCN par l'intermédiaire d'un réseau d'accès radio, RAN, 5G par l'intermédiaire d'une interface N1, l'AMF faisant partie du 5GCN, et
dans lequel, dans le mode NB-N1, un réseau d'accès radio de desserte actuel fournit l'accès à des services de réseau par l'intermédiaire d'E-UTRA, « Evolved Universal Terrestrial Radio Access », connecté au 5GCN pour un UE Internet des objets à bande étroite, NB-IoT, par l'intermédiaire de l'interface N1.

4. Appareil de la revendication 3, dans lequel, dans le mode WB-N1, le réseau d'accès radio de desserte actuel fournit l'accès à des services de réseau par l'intermédiaire d'E-UTRA connecté au 5GCN pour UE non en mode NB-N1 par l'intermédiaire de l'interface N1.

5. Appareil de la revendication 4, dans lequel CE mode A correspond à un nombre plus bas de répétitions PRACH, « Physical Random-Access CHannel », que CE mode B.

6. Appareil de la revendication 5, dans lequel le message REGISTRATION REQUEST est une initialisation d'enregistrement initial.

7. Appareil de la revendication 5, dans lequel le message REGISTRATION REQUEST est une initialisation de mise à jour d'enregistrement de mobilité ou périodique.

8. Appareil de la revendication 6, dans lequel la mémoire (608) est configurée pour stocker le message REGISTRATION REQUEST décodé.

9. Support de stockage non transitoire lisible par ordinateur configuré pour stocker des instructions pour exécution par une circuiterie de traitement de l'appareil de l'AMF, « Core Access and Mobility Management Function » de cinquième génération, 5G, de l'une quelconque des revendications 1 à 8, les instructions amenant la circuiterie de traitement (606) à réaliser les opérations de l'une quelconque des revendications 1 à **8.**

10. Procédé réalisé par une circuiterie de traitement d'une AMF, « Core Access and Mobility Management Function » de cinquième génération, 5G, avec le procédé comprenant la réalisation des opérations de l'une quelconque des revendications 1 à 8.
